(19) Europäisches Patentamt / European Patent Office / Office européen des brevets

(11) **EP 2 739 675 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**28.10.2020   Patentblatt 2020/44**

(45) Hinweis auf die Patenterteilung:
**09.09.2015   Patentblatt 2015/37**

(21) Anmeldenummer: **12741319.3**

(22) Anmeldetag: **27.07.2012**

(51) Int Cl.:
***C08J 9/06*** $^{(2006.01)}$

(86) Internationale Anmeldenummer:
**PCT/EP2012/064756**

(87) Internationale Veröffentlichungsnummer:
**WO 2013/017536 (07.02.2013 Gazette 2013/06)**

(54) **THERMISCH HÄRTBARE ZUBEREITUNGEN**

THERMALLY HARDENABLE PREPARATIONS

PRÉPARATIONS THERMODURCISSABLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.08.2011   DE 102011080223**

(43) Veröffentlichungstag der Anmeldung:
**11.06.2014   Patentblatt 2014/24**

(73) Patentinhaber: **Henkel AG & Co. KGaA**
**40589 Düsseldorf (DE)**

(72) Erfinder:
• **KOHLSTRUNG, Rainer**
  **68723 Plankstadt (DE)**
• **REIN, Manfred**
  **69493 Hirschberg (DE)**
• **WESCH, Karl**
  **69429 Waldbrunn (DE)**

(56) Entgegenhaltungen:
EP-A2- 1 557 453     WO-A1-2008/034755
GB-A- 1 465 844

EP 2 739 675 B2

**Beschreibung**

Die vorliegende Anmeldung betrifft eine thermisch expandierbare Zubereitung, die ein niedermolekulares multifunktionelles Acrylat und mindestens ein Peroxid in einem speziellen Mengenverhältnis enthält, Schottteile zur Abdichtung von Hohlräumen, die diese Zubereitung enthalten, ein Verfahren zur Herstellung derartiger Schottteile sowie ein Verfahren zum Abdichten von Hohlräumen in Bauteilen unter Verwendung derartiger Schottteile.

Moderne Fahrzeuge und Fahrzeugteile weisen eine Vielzahl von Hohlräumen auf, die abgedichtet werden müssen, um den Eintritt von Feuchtigkeit und Verschmutzungen zu verhindern, da diese zur Korrosion an den entsprechenden Karosserieteilen von innen heraus führen kann. Dies trifft insbesondere auf moderne selbst tragende Karosseriekonstruktionen zu, bei denen eine schwere Rahmenkonstruktion durch leichtgewichtige, strukturfeste Rahmengerüste aus vorgefertigten Hohlraumprofilen ersetzt wird. Derartige Konstruktionen weisen systembedingt eine Reihe von Hohlräumen auf, die gegen das Eindringen von Feuchtigkeit und Verschmutzungen abgedichtet werden müssen. Derartige Abdichtungen dienen weiterhin dem Zweck, die Weiterleitung von Luftschall in derartigen Hohlräumen zu vermeiden und somit unangenehme Fahrzeuglauf- und Windgeräuschen zu mindern und somit den Fahrkomfort im Fahrzeug zu steigern.

Derartige Hohlräume enthaltende Rahmen- und Karosserieteile können beispielsweise aus halbschaligen Bauteilen vorgefertigt werden, die zu einem späteren Zeitpunkt durch Schweißen und/oder Kleben zu dem geschlossenen Hohlprofil gefügt werden. Bei derartiger Bauweise ist der Hohlraum im frühen Aufbauzustand einer Fahrzeugkarosserie folglich leicht zugänglich, so dass abdichtende und akustisch dämpfende Schottteile in dieser Phase des Rohbaus durch mechanisches Einhängen, durch Einstecken in entsprechende Haltevorrichtungen, Bohrungen oder durch Anschweißen fixiert werden können. Weiterhin können derartige Hohlprofile aus Stahl-, Aluminium- oder Kunststoffwerkstoffen im Strangpressverfahren, durch Hydroforming, durch Druckguss- oder durch Zieh-Verfahren hergestellt werden. Die resultierenden Hohlräume sind nur noch durch die Querschnittsöffnungen am Ende dieser Profile zugänglich.

Schottteile, die eine abdichtende und/oder akustische Wirkung in derartigen Hohlräumen bewirken, werden häufig als "pillar filler", "baffles" oder "acoustic baffles" bezeichnet. Sie bestehen in der Regel entweder vollständig aus thermisch expandierbaren Formkörpern oder aus Formkörpern, die einen Träger und in ihrem Peripheriebereich expandierbare polymere Zubereitungen enthalten. Diese Schottteile werden im Rohbau durch Einhängen, Einclipsen, Verschrauben oder Anschweißen an den offenen Baustrukturen befestigt. Nach dem Schließen der Baustrukturen im Rohbau und den weiteren Vorbehandlungen der Karosserie wird dann die Prozesswärme der Öfen zur Aushärtung der kathodischen Tauchlackierung ausgenutzt, um die Expansion des expandierbaren Teils des Schottteils auszulösen um somit den Querschnitt des Hohlraums abzudichten.

Sowohl der Aufbau sowie die Geometrie derartiger Schottteile als auch die Zusammensetzung der thermisch expandierbaren Zubereitungen sind dabei Parameter, die in jüngster Zeit immer weiter optimiert wurden.

So werden beispielsweise in der DE-A1-196 32 351 schäumbare Massen beschrieben, die ein Gemisch aus einem Copoylmer und mindestens einem Treibmittel enthalten.

Auch die WO-A1-2001/30906 beschäftigt sich mit der Optimierung der thermisch expandierbaren Massen und schlägt vor, dass die Massen vor der Expansion mindestens ein modifiziertes Polyethylen, mindestens ein Hydrazid-Treibmittel, mindestens ein Kohlenwasserstoffharz und mindestens einen Schwefel-haltigen Härter enthalten.

Weiterhin wird in der WO-A1-2008/034755 vorgeschlagen, derartige thermisch härtbare Massen aus mindestens einem Anhydrid-funktionalisierten Thermoplasten, einem Amin-funktionalisierten latenten Härter und mindestens einem latenten Treibmittel herzustellen.

Die Anforderungen an die thermisch expandierbaren Zubereitungen sowohl im unexpandierten als auch expandierten Zustand sind in letzter Zeit immer weiter gestiegen.

So ist es beispielsweise von Interesse, dass die thermisch expandierbaren Zubereitungen im expandierten Zustand eine gute Haftung auch auf geölten Blechen aufweisen.

Ferner besteht das Problem, dass nicht alle Teile des Fahrzeugs im Härtungsofen auf die gleiche Temperatur erhitzt werden. So können einige Bereiche während der Härtung dichter an die Heizquelle kommen und somit höheren Temperaturen ausgesetzt sein ("Überbrand").

Andere Bereiche können hingegen konstruktionsbedingt gegen die Hitze abgeschirmt sein und nicht die optimale Härtungstemperatur erreichen ("Unterbrand"). So sind insbesondere die Bereiche in den strukturellen Hohlräumen häufig von dicken Metallwänden abgeschirmt und werden aufgrund der sie umgebenden Masse nicht auf die optimalen Temperaturen erhitzt, das heißt, diese Bereiche erreichen wenn dann nur kurzzeitig maximale Temperaturen, die meist dann auch noch deutlich unter den optimalen Bedingungen liegen. Dementsprechend ist es vorteilhaft, wenn die thermisch expandierbaren Zubereitungen derart beschaffen sind, dass sie über einen weiten Temperaturbereich ausreichend stark expandieren und insbesondere bei höheren Temperaturen nicht wieder in sich zusammenfallen.

Schließlich sollten die thermisch expandierbaren Zubereitungen derart formuliert sein, dass sie auch enge Kavitäten möglichst vollständig ausfüllen können und so auch bei komplexen Hohlraumstrukturen eine optimale Abdichtung ermöglichen.

Die Mittel des Standes der Technik konnten bisher noch nicht alle Anforderungen an derartige Schottteile vollständig erfüllen.

Nunmehr wurde gefunden, dass Mittel, die eine Kombination eines peroxidisch vernetzbaren Polymers mit einem multifunktionellen Acrylat und einem Peroxid in einem speziellen Mengenverhältnis bei gleichzeitiger Anwesenheit eines Treibmittelgemischs enthalten, die an derartige thermisch expandierbare Zubereitungen gestellten Anforderungen in einem hohem Maße erfüllen.

Ein erster Gegenstand der vorliegenden Erfindung sind daher thermisch expandierbare Zubereitungen, enthaltend

(a) mindestens ein peroxidisch vernetzbares Polymer,
(b) mindestens eine niedermolekulares multifunktionelles Acrylat,
(c) mindestens ein Peroxid sowie
(d) mindestens zwei voneinander verschiedene Treibmittel,

wobei das Massenverhältnis des mindestens einen Peroxids zu dem mindestens einen niedermolekularen multifunktionellen Acrylat mindestens 1:3 beträgt, als mindestens ein peroxidisch vernetzbares Polymer ein oder mehrere Ethylen-Vinylacetat-Copolymere enthalten sind und weniger als 3 Gew.-% eines peroxidisch vernetzbaren Polymers enthalten ist, das kein Ethylen-Vinylacetat-Copolymer ist.

Eine erste erfindungswesentliche Komponente ist das peroxidisch vernetzbare Polymer. Als "peroxidisch vernetzbar" bezeichnet der Fachmann derartige Polymere, bei denen durch Einwirkung eines radikalischen Starters ein Wasserstoffatom aus der Haupt- oder einer Nebenkette abstrahiert werden kann, so dass ein Radikal zurückbleibt, das in einem zweiten Reaktionsschritt andere Polymerketten angreift.

Unter einem funktionalisierten Copolymeren wird ein Copolymer verstanden, das mit zusätzlichen Hydroxidgruppen, Carboxygruppen, Anhydridgruppen, Acrylatgruppen und/oder Glycidylmethacrylat-Gruppen versehen ist.

Besonders gute Haftungseigenschaften insbesondere auf geöltem Blech werden, für die erfindungsgemäßen thermisch härtbaren Zubereitungen erzielt, die ein oder mehrere Ethylen-Vinylacetat-Copolymere als alleinige peroxidisch härtbare Polymere enthalten, das heißt, dass die thermisch härtbaren Zubereitungen außer den Ethylen-Vinylacetat-Copolymeren im wesentlichen frei sind von weiteren peroxidisch härtbaren Polymeren.

Thermisch expandierbare Zubereitungen sind erfindungsgemäß "im wesentlichen frei von weiteren peroxidisch härtbaren Polymeren", wenn sie weniger als 3 Gew.-%, vorzugsweise weniger als 1,5 Gew.-%, ganz besonders bevorzugt weniger als 0,5 Gew.-% eines peroxidisch vernetzbaren Polymeren enthalten, das kein Ethylen-Vinylacetat-Copolymer ist.

Thermisch expandierbare Zubereitungen, die mindestens ein Ethylen-Vinylacetat-Copolymer mit einem Vinylacetatanteil von 9 bis 30 Gew.-%, insbesondere von 15 bis 20 Gew.-%, ganz besonders von 17,5 bis 19 Gew.-%, bezogen auf die Gesamtmasse des Copolymeren, enthalten, sind erfindungsgemäß besonders bevorzugt.

Weiterhin hat es sich als vorteilhaft erwiesen, wenn die thermisch expandierbare Zubereitung ein peroxidisch vernetzbares Polymer, ein Ethylen-Vinylacetat-Copolymer, mit einem Schmelzindex von 0,3 g bis 400 g/10 min, insbesondere von 0,5 g bis 45 g/10 min, enthält. Peroxidisch vernetzbare Polymere, Ethylen-Vinylacetat-Copolymere, mit einem Schmelzindex von 1,5 g bis 25 g/10 min, insbesondere von 2 g bis 10 g/10 min, ganz besonders von 2 g bis 5 g/10 min sind vorteilhaft. Es kann erfindungsgemäß vorteilhaft sein, wenn zwei oder mehrere Polymere mit verschiedenen Schmelzindices in den thermisch expandierbaren Zubereitungen eingesetzt werden.

Der Schmelzindex wird erfindungsgemäß in einem Kapillarrheometer bestimmt, wobei das Polymer bei 190°C in einem beheizbaren Zylinder aufgeschmolzen und unter einem durch die Auflagelast (2,16 kg) entstehenden Druck durch eine definierte Düse (Kapillare) gedrückt wird (ASTM D1238). Ermittelt wird die austretende Masse als Funktion der Zeit.

Die thermisch expandierbaren Zubereitungen enthalten erfindungsgemäß vorzugsweise mindestens 45 Gew.-% mindestens eines peroxidisch vernetzbaren Polymeren. Thermisch expandierbare Zubereitungen, die 47 bis 93,5 Gew.-%, insbesondere 66 bis 86 Gew.-%, mindestens eines peroxidisch vernetzbaren Polymeren jeweils bezogen auf die Gesamtmasse der thermisch expandierbaren Zubereitung enthalten, sind besonders bevorzugt.

Als zweiten erfindungswesentlichen Bestandteil enthalten die thermisch expandierbaren Zubereitungen mindestens ein niedermolekulares multifunktionelles Acrylat.

Unter einem "niedermolekularen multifunktionellen Acrylat" wird erfindungsgemäß eine Verbindung verstanden, die mindestens zwei Acrylatgruppen aufweist und ein Molgewicht unterhalb von 2400 g/mol, vorzugsweise unterhalb von 800 g/mol, aufweist.

Erfindungsgemäß haben sich insbesondere derartige Verbindungen als vorteilhaft erwiesen, die zwei, drei oder mehr Acrylatgruppen pro Molekül aufweisen.

Bevorzugte difunktionelle Acrylate sind Ethylenglycol-Dimethacrylat, Diethylenglycol- Dimethacrylat, Triethlenglycol-Dimethacrylat, Triethlenglycol-Diacrylat, Tripropyleneglycol-Dimethacrylat, 1,4-Butandiol-Dimethacrylat, 1,3 Butylenglycol-Dimethacrylat, 1,3-Butandiol-Dimethacrylat, Tricyclodecandimethanol-Dimethacrylat, 1,10-Dodecandiol-Dimethacrylat, 1,6-Hexandiol-Dimethacrylat, 2-Methyl-1,8-octandiol-Dimethacrylat, 1,9-Nonandiol-Dimethacrylat, Neopentylglycol-Dimethacrylat und Polybutylenglycol-Dimethacrylat.

Bevorzugte niedermolekulare Acrylate mit drei oder mehr Acrylatgruppen sind Glycerintriacrylat, Dipentaerythritol-Hexaacrylat, Pentaerythritol-Triacrylat (TMM), Tetramethylolmethan- Tetraacrylat (TMMT), Trimethylolpropan-Triacrylat (TMPTA), Pentaerythritol-Trimethacrylat, Di-(Trimethylolpropan)-Tetraacrylat (TMPA), Pentaerythritol-Tetraacrylat, Trimethylolpropan- Trimethacrylat (TMPTMA), Tri(2-acryloxyethyl)isocyanurat und Tri(2- methacryloxyethyl)trimellitat sowie deren ethoxylierten und propoxylierten Derivate mit einem Gehalt von maximal 35-EO-Einheiten und/oder maximal 20-PO-Einheiten.

Thermisch expandierbare Zubereitung die ein niedermolekulares multifunktionelles Acrylat ausgewählt aus Triethylenglykoldiacrylat, Triethlenglycol-Dimethacrylat, Trimethylolpropantriacrylat (TMPTA) und Trimethylolpropantrimethacrylat (TMPTMA), Pentaerythritol-Triacrylat (TMM), Tetramethylolmethan-Tetraacrylat (TMMT), Pentaerythritol-Trimethacrylat, Di-(Trimethylolpropan)-Tetraacrylat (TMPA) und Pentaerythritol-Tetraacrylat enthalten, sind erfindungsgemäß ganz besonders bevorzugt.

Neben den erfindungsgemäßen niedermolekularen Acrylaten können die erfindungsgemäßen thermisch expandierbaren Zubereitungen weitere Covernetzer, wie beispielsweise Allylverbindungen, wie Triallylcyanurat, Triallyl-isocyanurat, Triallyl-trimesat, Triallyl-trimellitat (TATM), Tetraallyl-pyromellitat, den Diallylester von 1,1,3-Trimethyl-5-carboxy-3-(4-carboxyphenyl)inden, Trimethylolpropan-trimellitat (TMPTM) oder Phenylen-dimaleimide enthalten.

Erfindungsgemäß hat es sich als besonders vorteilhaft erwiesen, wenn die thermisch expandierbaren Zubereitungen mindestens ein niedermolekulares multifunktionelles Acrylat ausgewählt aus Triethylenglykoldiacrylat, Trimethylolpropantriacrylat (TMPTA) und Trimethylolpropantrimethacrylat (TMPTMA) enthalten.

Die niedermolekularen multifunktionellen Acrylate sind in den thermisch expandierbaren Zubereitungen vorzugsweise in einer Menge von 0,2 bis 2,5 Gew.-%, insbesondere von 0,4 bis 1,4Gew.-%, jeweils bezogen auf die Gesamtmasse der thermisch expandierbaren Zubereitung enthalten.

Als dritte erfindungswesentliche Komponente enthalten die erfindungsgemäßen thermisch expandierbaren Zubereitungen mindestens ein Peroxid. Erfindungsgemäß sind insbesondere die organischen Peroxide, wie beispielsweise Ketonperoxide, Diacylperoxide, Perester, Perketale und Hydroperoxide bevorzugt. Besonders bevorzugt sind beispielsweise Cumenhydroperoxid, t-Butylperoxid, Bis(tert-butylperoxy)-diisopropylbenzol, Di(tert-butylperoxyisopropyl)benzol, Dicumylperoxid, t-Butylperoxybenzoat, Di-alkylperoxydicarbonat, Diperoxyketale (z.B. 1,1-Di-tert-butylperoxy-3,3,5-trimethylcyclohexan), Ketonperoxide (z.B. Methylethylketon-Peroxide) und 4,4- Di-tert-butylperoxy-n-butyl-valerate.

Besonders bevorzugt sind erfindungsgemäß die beispielsweise kommerziell von der Firma Akzo Nobel vertriebenen Peroxide, wie 3,3,5,7,7-Pentamethyl-1,2,4-trioxepan, 2,5-Dimethyl-2,5-di(tert-butylperoxy)hex-3-in, Di-tert-butylperoxid, 2,5-Dimethyl-2,5-di(tert-butylperoxy)hexan, tert-Butylcumylperoxid, Di(tert-butylperoxyisopropyl)benzol, Dicumylperoxid, Butyl-4,4-di(tert-butylperoxi)valerat, tert-Butylperoxy-2-ethylhexylcarbonat, 1,1-Di-(tert-butylperoxy)-3,3,5-trimethylcyclohexan, tert-Butylperoxybenzoat, Di-(4-methylbenzoyl)peroxid und Dibenzoylperoxid.

Es hat sich weiterhin als erfindungsgemäß vorteilhaft erwiesen, wenn die eingesetzten Peroxide bei Raumtemperatur im Wesentlichen inert sind und erst bei Erhitzung auf höhere Temperaturen aktiviert werden (beispielsweise bei Erhitzung auf Temperaturen zwischen 130°C und 240°C). Besonders vorteilhaft ist es erfindungsgemäß, wenn das eingesetzte Peroxid bei 65°C eine Halbwertszeit von mehr als 60 Minuten aufweist, dass heißt, dass nach einer Erhitzung der thermisch expandierbaren Zubereitung enthaltend das Peroxid auf 65°C für 60Minuten sich weniger als die Hälfte des eingesetzten Peroxids zersetzt hat. Erfindungsgemäß können solche Peroxide besonders bevorzugt sein, die bei 115°C eine Halbwertszeit von 60 Minuten aufweisen.

Es kann erfindungsgemäß besonders bevorzugt sein, Di(tert-butylperoxyisopropyl)benzol als Peroxid einzusetzen; dies ist beispielsweise unter den Handelsbezeichnungen Perkadox® 14-40 B-PD oder Perkadox® 14-40 K PD von der Firma Akzo Nobel oder unter den Handelsbezeichnung Peroxan® BIB 40 GS oder Peroxan® BIB 40 P von der Firma Pergan kommerziell erhältlich.

In einer weiteren erfindungsgemäß Form kann es ebenso bevorzugt sein, Dicumylperoxid, wie es beispielsweise unter den Handelsbezeichnungen Perkadox® BC 40 K PD oder Perkadox® BC 40 B PD von der Firma Akzo Nobel oder unter den Handelsbezeichnungen Peroxan® DC 40 GS, Peroxan® DC 40 P oder Peroxan® DC 40 PK von der Firma Pergan vertrieben wird, einzusetzen.

Ferner ist es erfindungsgemäß vorteilhaft, wenn das mindestens eine oder die Peroxide in einer auf einen festen inerten Träger, wie beispielsweise Calciumcarbonat und/oder Silica und/oder Kaolin aufgebrachten Form eingesetzt werden.

Das mindestens eine oder die Peroxide sind in den erfindungsgemäßen thermisch expandierbaren Zubereitungen vorzugsweise in einer Menge von 0,2 bis 1,1Gew.-%, insbesondere in einer Menge von 0,4 bis 0,7 Gew.-%, jeweils bestimmt als Aktivsubstanzgehalt an Peroxid bezogen auf die Gesamtmasse der thermisch expandierbaren Zubereitung, enthalten.

Weiterhin ist es erfindungswesentlich, dass das Massenverhältnis des mindestens einen Peroxids zu dem mindestens einen niedermolekularen multifunktionellen Acrylat mindestens 1:3 beträgt. Ein Massenverhältnis von mindestens 1:3 ist erfindungsgemäß immer dann erreicht, wenn die Formulierung bezogen auf 1g Peroxid höchstens 3g niedermolekulares multifunktionelles Acrylat enthält. Ein Massenverhältnis von mindestens 1:2,5, insbesondere von mindestens 1:1,5 ist besonders bevorzugt.

Durch die Wahl dieses Massenverhältnisses ist es erfindungsgemäß möglich, dass die Anbindung, das heißt Haftung am gegenüberliegenden Blech, verbessert wird. Es wurde gefunden, dass die erfindungsgemäßen thermisch expandierbaren Zubereitungen insbesondere in Engstellen des abzudichtenden Systems eine bessere Haftung aufweisen, da der Schaum selbst bis in kleinste Ecken und spitze Winkel vordringt und somit eine vollständigere Abdichtung des Systems ermöglicht.

Als vierte erfindungswesentliche Komponente enthalten die thermisch expandierbaren Zubereitungen mindestens zwei voneinander verschiedene chemische Treibmittel.

Unter einem chemischen Treibmittel werden erfindungsgemäß Verbindungen verstanden, die sich bei Einwirkung von Wärme zersetzen und dabei Gase freisetzen.

Beispiele für geeignete chemische Treibmittel sind Azoverbindungen, Hydrazidverbindungen, Nitrosoverbindungen und Carbazidverbindungen, wie beispielsweise Azobisisobutyronitril, Azodicarbonamid (ADCA), Di-nitroso-pentamethylentetramin, 4,4'-Oxybis(benzolsulfonsäure hydrazid) (OBSH), Azocyclohexylnitril, Azodiaminobenzol, Benzol-1,3-sulfonylhydrazid, Calciumazid, 4,4'-Diphenyldisulfonylazid, Diphenyl-sulfon-3,3'-disulfohydrazid, Benzol-1,3-disulfohydrazid, Trihydrazinotriazin, p-Toluolsulfonylhydrazid und p-Toluolsulfonylsemicarbazid.

Es kann erfindungsgemäß bevorzugt sein, wenn die thermisch expandierbaren Zubereitungen ein erstes Treibmittel, das bereits unterhalb von 140°C aktiviert wird, und ein zweites Treibmittel, das erst bei Temperaturen oberhalb von 160°C aktiviert wird, enthalten.

Es hat sich erfindungsgemäß als besonders vorteilhaft erwiesen, wenn ein Treibmittelgemisch aus mindestens einem Sulfonsäurehydrazid und Azadicarbonamid eingesetzt wird.

Bevorzugte Sulfonsäurehydrazide sind insbesondere 4,4'-Oxybis(benzolsulfonsäurehydrazid) (OBSH), Benzol-1,3-sulfonsäurehydrazid und 4-Methylbenzolsulfonsäurehydrazid.

Im Rahmen dieser Ausführungsform haben sich Zubereitungen als vorteilhaft erwiesen, die einen Gehalt von Azadicarbonamid von 0,5 bis 3,5Gew.-%, insbesondere von 1,0 bis 2,5Gew.-%, jeweils bezogen auf die Gesamtmasse der thermisch expandierbaren Zubereitung, enthalten.

Weiterhin sind thermisch expandierbare Zubereitungen bevorzugt, die einen Gehalt an Sulfonsäurehydrazid von 5,0 bis 12,5Gew.-%, insbesondere von 5,2 bis 8,5Gew.-%, jeweils bezogen auf die Gesamtmasse der thermisch expandierbaren Zubereitung, enthalten.

Die erfindungsgemäßen thermisch expandierbaren Zubereitungen weisen insbesondere dann ein kontinuierliches Expansionsverhalten über einen großen Temperaturbereich ohne Schrumpfungseffekte bei Überbrandbedingungen auf, wenn sie einen Überschuss an Sulfonsäurehydrazid gegenüber dem Azadicarbonamid enthalten. Formulierungen mit einem Massenverhältnis von Sulfonsäurehydrazid : Azadicarbonamid von mindestens 3:1, insbesondere von mehr als 3,5 : 1 haben sich in dieser Hinsicht als ganz besonders bevorzugt erwiesen.

Die erfindungsgemäßen "chemische Treibmittel" können vorteilhafter Weise in Kombination mit Aktivatoren und/oder Beschleunigern, wie beispielsweise Zinkverbindungen (beispielsweise Zinkoxid, Zinkstearat, Zink-di-toluolsulfinat, Zink-di-benzolsulfinat), Magnesiumoxid und/oder (modifizierten) Harnstoffen zum Einsatz kommen. Die Zinkverbindungen, insbesondere Zink-di-toluolsulfinat, sind erfindungsgemäß besonders bevorzugt.

Dabei spielt es erfindungsgemäß keine wesentliche Rolle, ob die Treibmittel bereits in aktivierter Form eingesetzt werden oder, ob die thermisch expandierbaren Zubereitungen zusätzlich zu dem Treibmittel einen entsprechenden Aktivator und/oder Beschleuniger, wie beispielsweise Zink-di-toluolsulfinat enthalten.

Es hat sich als besonders vorteilhaft erwiesen, wenn die erfindungsgemäßen thermisch expandierbaren Zubereitungen die Aktivatoren und/oder Beschleuniger, insbesondere die Zinkverbindungen, ganz besonders das Zink-di-Toluolsulfinat, in einer Menge von 0,2 bis 1,4Gew.-%, insbesondere von 0,5 bis 0,85Gew.-%, bezogen auf die Gesamtmasse der thermisch expandierbaren Zubereitung, enthalten.

Neben den erfindungsgemäßen Bestandteilen können die thermisch expandierbaren Massen noch weitere übliche Komponenten, wie beispielsweise Farbstoffe, Füllstoffe und/oder Antioxidantien enthalten.

Als Füllstoffe kommen beispielsweise die diversen gemahlenen oder gefällten Kreiden, Ruß, Calcium-Magnesiumcarbonate, Talkum, Graphit, Schwerspat, Kieselsäuren oder Silica sowie insbesondere silikatische Füllstoffe, wie beispielsweise Glimmer, etwa in Form von Chlorit, oder silikatische Füllstoffe vom Typ des Aluminium-Magnesium-Calcium-Silicats, z. B. Wollastonit, in Frage. Talkum ist ein besonders bevorzugter Füllstoff.

Die Füllstoffe werden vorzugsweise in einer Menge von 1 bis 16Gew.-%, insbesondere von 5 bis 10Gew.-%, jeweils bezogen auf die Masse der gesamten thermisch expandierbaren Zubereitung eingesetzt.

Farbgebende Komponenten, insbesondere schwarze Farbstoffe auf Basis von Rußen, sind in den erfindungsgemäßen thermisch expandierbaren Zubereitungen vorzugsweise in einer Menge von 0 bis 0,6Gew.-%, insbesondere von 0,2 bis 0,4Gew.-%, jeweils bezogen auf die Masse der gesamten thermisch expandierbaren Zubereitung enthalten.

Als Antioxidantien oder Stabilisatoren können beispielsweise sterisch gehinderte Phenole und/oder sterisch gehinderte Thioether und/oder sterisch gehinderte aromatische Amine eingesetzt werden, wie beispielsweise Bis-(3,3-bis-(4'-hydroxy-3-tert. butylphenyl) butansäure)-glykolester.

Antioxidantien oder Stabilisatoren sind in den erfindungsgemäßen thermisch expandierbaren Zubereitungen vorzugsweise in einer Menge von 0 bis 0,5Gew.-%, insbesondere von 0,1 bis 0,3Gew.-%, jeweils bezogen auf die Masse der gesamten thermisch expandierbaren Zubereitung enthalten.

Die erfindungsgemäßen thermisch expandierbaren Zubereitungen sind vorzugsweise derart formuliert, dass sie bei 22°C fest sind. Eine thermisch expandierbare Zubereitung wird erfindungsgemäß als "fest" bezeichnet, wenn die Geometrie dieser Zubereitung sich bei der angegebenen Temperatur innerhalb von 1 Stunde, insbesondere innerhalb von 24 Stunden, nicht unter dem Einfluss der Schwerkraft verformt.

Die erfindungsgemäßen thermisch expandierbaren Zubereitungen können durch Mischung der ausgewählten Komponenten in einem beliebigen, geeigneten Mischer, wie beispielsweise einem Dispersionsmischer, einem Planetenmischen, einem Doppelschneckenmischer, einem kontinuierlichen Mischer oder einem Extruder, insbesondere einem Doppelschneckenextruder, hergestellt werden.

Obwohl es vorteilhaft sein kann die Komponenten etwas zu erhitzen, um die Erreichung einer homogenen, einheitlichen Masse zu erleichtern, muss dafür Sorge getragen werden, dass keine Temperaturen erreicht werden, die eine Aktivierung des Peroxids und/oder des Treibmittelgemischs bewirken. Die resultierende thermisch expandierbare Zubereitung kann unmittelbar nach ihrer Herstellung in Form gebracht werden, beispielsweise durch Blasformen, Pelletierung, Spritzgussverfahren, Formpressverfahren, Stanzverfahren oder Extrusion.

Obwohl es erfindungsgemäß bevorzugt sein kann, die gesamte thermisch expandierbare Zubereitung herzustellen, zu extrudieren und beispielsweise in Pelletform bis zur Herstellung der Schottteile zu lagern, hat es sich weiterhin erfindungsgemäß als vorteilhaft erwiesen, die thermisch expandierbare Zubereitung bis zu ihrer thermischen Verformung als Zweikomponentenmittel zu formulieren.

Diese Zweikomponentenmittel umfassen vorzugsweise eine erste Komponente, die einen geringen Anteil der Gesamtmenge an peroxidisch vernetzbarem Polymer sowie alle übrigen Komponenten enthält. Diese erste Komponente kann separat gefertigt und gelagert werden. Diese Trennung der Gesamtzubereitung in zwei Komponenten ermöglicht eine kostenoptimierte Herstellung der Schottteile, da sämtliche kritischen Bestandteile in der ersten Formulierung enthalten sind, die ein geringeres Gewicht als die endgültige thermisch expandierbare Zubereitung aufweist. Vorzugsweise sind maximal 20% der Gesamtmenge des peroxidisch vernetzbaren Polymeren in der ersten Komponente enthalten. Die zweite Komponente enthält dann die restliche Menge des Polymeren so wie gegebenenfalls weitere Hilfsstoffe und Additive. Es kann erfindungsgemäß bevorzugt sein, wenn die zweite Komponente nur die Restmenge des Polymers enthält.

Vor der Herstellung der Schottteile können die beiden Komponenten des Zweikomponentenmittels in einer Spritzgussmaschine mit Doppelschnecke miteinander vermischt werden und anschließend die resultierende Mischung in die gewünschte Form injiziert werden. Es ist aber erfindungsgemäß auch möglich, die Bestandteile des Zweikomponentenmittels zunächst zu der vollständigen thermisch expandierbaren Zubereitung zu vermischen, diese zu pelletieren und die pelletierte Gesamtzubereitung dann in einem separaten Schritt in die Formen zu injizieren

Die Expansion der thermisch expandierbaren Zubereitung erfolgt durch Erhitzung, wobei die Zubereitung für eine bestimmte Zeit auf eine bestimmte Temperatur erhitzt wird, die ausreichend ist, um die Aktivierung der Treibmittel sowie des Peroxids zu bewirken.

In Abhängigkeit von der Zusammensetzung der Zubereitung und den Bedingungen der Fertigungslinie liegen derartige Temperaturen üblicherweise im Bereich von 130°C bis 240°C, vorzugsweise 150°C bis 200°C, mit einer Verweilzeit von 10 bis 90 Minuten, vorzugsweise von 15 bis 60 Minuten.

Im Bereich des Fahrzeugbaus ist es besonders vorteilhaft, wenn die Expansion der erfindungsgemäßen Zubereitungen während der Passage des Fahrzeugs durch den Ofen zur Aushärtung der kathodischen Tauchlackierung erfolgt, so dass auf einen separaten Erhitzungsschritt verzichtet werden kann.

Die thermisch expandierbaren Zubereitungen der vorliegenden Erfindung können in einem weiten Bereich von Dichtungs- und Klebstoffapplikationen zum Einsatz kommen, beispielsweise im Bereich der Schottteile zur Abdichtung von Hohlräumen in Fahrzeugen.

Die thermisch expandierbaren Zubereitungen sind dementsprechend besonders für die Herstellung von Schottteilen zur Hohlraumabdichtung geeignet, d.h. zur Herstellung von Teilen, die in die Hohlräume von Fahrzeugen eingesetzt werden, anschließend durch Erhitzung expandieren und auf diese Weise den Hohlraum möglichst vollständig abdichten.

Ein zweiter Gegenstand der vorliegenden Erfindung ist dementsprechend ein Schottteil zum Abdichten von Hohlräumen eines Bauteils, das eine Form aufweist, die an den Hohlraum angepasst ist, und eine erfindungsgemäße thermisch härtbare Zubereitung aufweist.

Derartige Schottteile werden aus den erfindungsgemäßen thermisch expandierbaren Zubereitungen üblicherweise durch Spritzgusstechniken hergestellt. Dabei werden die thermisch expandierbaren Zubereitungen auf Tempe-

EP 2 739 675 B2

raturen im Bereich von 70 bis 110°C, insbesondere von 75 bis 90°C erhitzt und dann in eine entsprechend ausgebildete Form injiziert.

Es ist erfindungsgemäß bevorzugt, wenn die Schottteile mindestens ein Befestigungselement aufweisen, das die Verankerung des Schottteils in dem Hohlraum ermöglicht.

In einer Ausführungsform dieses Gegenstandes der vorliegenden Erfindung sind die Schottteile vollständig aus der thermisch expandierbaren Zubereitung gefertigt. So kann die Zubereitung beispielsweise mittels eines Spritzgussverfahrens, durch Ausstanzen aus einer vorgefertigten Platte oder durch Extrusion durch eine Matrize mit anschließendem Ablängen in die gewünschte Form des Schottteils gebracht werden.

In dieser Ausführungsform sind Befestigungselemente integraler Bestandteil des Schottteils, das heißt, diese sind ebenfalls aus der thermisch expandierbaren Zubereitung gefertigt. Derartige Befestigungselemente können die Form einer Ausbuchtung annehmen und somit dazu beitragen, dass das Schottteil an der für es vorgesehenen Stelle im Hohlraum verbleibt.

So können die Befestigungselemente beispielsweise derart ausgestaltet sein, dass sie in eine Öffnung des Hohlraums eingeführt werden können, wobei sie vorzugsweise so ausgestaltet werden, dass sie nicht wieder aus der Öffnung entfernt werden können (beispielsweise durch die Verwendung von Haken oder geeigneten Erhöhungen). Dabei ist es besonders bevorzugt, wenn die Befestigungselemente aus der thermisch expandierbaren Zubereitung gefertigt sind, da diese im Zuge der Expansion durch die Erhitzung auch diese Öffnungen vollständig verschließt.

In einer anderen Ausführungsform dieses Gegenstandes der vorliegenden Erfindung ist nur der Hauptbestandteil des Schottteils aus der thermisch expandierbaren Zubereitung gefertigt. Die Schottteile dieser Ausführungsform enthalten zusätzlich zu dem expandierbaren Hauptteil Befestigungselemente aus einem anderen nicht-expandierbaren Material, wie beispielsweise Metall oder Hitze-resistentem Kunststoff. So kann beispielsweise ein Pin oder ein zusammendrückbarer Stopfen als Befestigungselement an einer Kante in der thermisch expandierbaren Zubereitung verankert sein, der in eine Öffnung des abzudichtenden Hohlraumes eingeführt werden kann.

In einer weiteren bevorzugten Ausführungsform dieses Gegenstandes der vorliegenden Erfindung hat es sich als vorteilhaft erwiesen, wenn das Schottteil einen Träger aufweist, auf den die thermisch expandierbare Zubereitung aufgebracht wird. Diese Ausgestaltungsform ermöglicht einen äußerst kostengünstigen und effizienten Einsatz der thermisch expandierbaren Zubereitung. So kann beispielsweise die Menge der thermisch expandierbaren Zubereitung, die zur Abdichtung des Hohlraums erforderlich ist, minimiert werden. Außerdem kann der Träger dazu genutzt werden, den expandierenden Schaum in Richtung der Wände des Hohlraums zu lenken, um ein Zusammensacken oder eine sonstige ungewünschte Verformung des Schaumes zu vermeiden. Die Menge der thermisch expandierbaren Zubereitung in dem Schottteil wird vorzugsweise so gewählt, dass das aufgeschäumte Material den Zwischenraum zwischen Schottteil und Hohlraumwänden vollständig ausfüllt und somit den Hohlraum versiegelt und die Übertragung von Geräuschen verhindert.

Der Träger besteht vorzugsweise aus einem thermoplastischen Material, das unter normalen Anwendungsbedingungen ausreichend bruchstabil ist und einen Schmelz- oder Erweichungspunkt aufweist, der oberhalb der Aushärtungstemperatur des Bauteils liegt. Der Träger kann erfindungsgemäß aus einer Vielzahl von polymeren Materialien, wie beispielsweise Polyestern, aromatischen Polyethern, Polyetherketonen und insbesondere Polyamiden, wie beispielsweise Nylon-66, gefertigt werden. Das Trägermaterial kann zusätzlich zu den polymeren Bestandteilen weitere Additive und Füllstoffe enthalten, wie beispielsweise Farbstoff und/oder verstärkende Fasern. Alternativ kann der Träger auch aus Metall, wie beispielsweise Stahl oder Aluminium, gefertigt sein.

Die thermisch expandierbare Zubereitung kann gemeinsam mit dem Träger durch herkömmliche Verfahren hergestellt werden. Insbesondere Spritzgussverfahren, bei denen beide Komponenten injiziert werden, sind besonders vorteilhaft. Es ist aber erfindungsgemäß auch bevorzugt, wenn das Trägermaterial in einem separaten Schritt gespritzt wird und erst anschließend in einem separaten Schritt, gegebenenfalls sogar mittels einer separaten Maschine, die thermisch expandierbare Zusammensetzung auf den Träger aufgebracht wird.

Die erfindungsgemäßen Schottteile können in allen Produkten zum Einsatz kommen, die Hohlräume aufweisen. Dies sind neben den Fahrzeugen beispielsweise auch Flugzeuge, Haushaltsgeräte, Möbel, Gebäude, Wände, Abtrennungen oder auch Boote.

Ein weiterer Gegenstand der vorliegenden Erfindung ist ein Verfahren zur Abdichtung von Hohlräumen eines Bauteils, wobei ein erfindungsgemäßes Schottteil in den Hohlraum eingebracht wird und anschließend auf eine Temperatur oberhalb von 130°C erhitzt wird, so dass die thermisch expandierbare Zubereitung expandiert und den Hohlraum abdichtet.

Bezüglich der Details dieses Gegenstandes der vorliegenden Erfindung gilt mutatis mutandis das zu den anderen Gegenständen bereits Gesagte.

Ein weiterer Gegenstand der vorliegenden Erfindung ist die Verwendung eines erfindungsgemäßen Schottteils zur akustischen Abdichtung von Hohlräumen in Bauteilen und/oder zur Abdichtung von Hohlräumen in Bauteilen gegen Wasser und/oder Feuchtigkeit.

Bezüglich der Details dieses Gegenstandes der vorliegenden Erfindung gilt mutatis mutandis das zu den anderen Gegenständen bereits Gesagte.

Ausführungsbeispiele

*1 Herstellung der Formulierungen*

1.1 <u>Herstellung der Masterbatches</u>

Zunächst wurden verschiedene Masterbatches aus Farbstoff, Talkum, Zink-di-toluolsulfinat, Trimethylolpropantrimethacrylat, Dicumylperoxid, Di(tert-butylperoxyisopropyl)benzol, EVA, LDPE, Bis-(3,3-bis-(4'-hydroxy-3-terl. butylpheriyl) butansaure)-glykolester, Diphenyloxid-4,4'-disulfohydrazid und Azodicarbonamid gemäß den Mengenangaben in Tabelle 1 hergestellt. Dazu wurden die Komponenten miteinander vermischt, bei 70 bis 90°C einem kontinuierlichen Doppelschneckenextruder zugeführt und anschließend extrudiert und pelletiert.

1.2 <u>Herstellung der thermisch expandierbaren Zubereitungen</u>

Zur Herstellung der erfindungsgemäßen thermisch expandierbaren Zubereitungen wurden die verschiedenen Masterbatches jeweils mit den in Tabelle 1 angegebenen Mengen an zusätzlichem Ethylen-Vinylacetat-Copolymeren bei 70 bis 110°C in einer Spritzgussmaschine über eine Doppelschnecke gemischt, in verschiedene Plattenformen (20cm x 20cm, Dicke von 2-6mm) gespritzt und auf Raumtemperatur abgekühlt.

*2 Bestimmung der Expansion*

Zur Bestimmung der Expansion wurden aus den gefertigten Platten Prüfkörper mit den Dimensionen 40mm x 40mm x 4mm geschnitten, diese in einen Umluftofen eingeführt, dieser auf die in Tabelle 1 genannte Temperatur erhitzt (Aufheizzeit ca. 7 bis 10 min) und die Prüfkörper dann für den in Tabelle 1 genannten Zeitraum bei dieser Temperatur belassen. Die Expansion bei 180°C entspricht dabei den idealen Bedingungen, die im Rahmen der Aushärtung im Fahrzeugbau erzielt werden. Die Expansion bei 150°C simuliert die Unterbrandbedingungen, die Expansion bei 220°C die Überbrandbedingungen.

Das Ausmaß der Expansion wurde mittels der Wasserverdrängungsmethode nach der Formel

$$Expansion = \frac{(m2 - m1)}{m1} \times 100$$

m1 = Masse des Prüfkörpers im Originalzustand in deionisiertem Wasser
m2 = Masse des Prüfkörpers nach Einbrand in deionisiertem Wasser ermittelt.

*3 Bestimmung der Haftung auf verschiedenen Stahlqualitäten*

In einer weiteren Versuchsreihe wurde die Haftung der resultierenden expandierten Zusammensetzungen auf verschiedenen Arten von Stahl ermittelt. Dazu wurden jeweils 3 Proben der folgenden Stahlsorten verwendet und der Mittelwert der Ergebnisse gebildet:

HDG: Feuerverzinkter Stahl (hot dipped galvanized)
EGS: Elektrogalvanisierter Stahl (electro galvanized steel)
CRS: Kaltgewalzter Stahl (cold rolled steel)
KTL: Stahl mit kathodischer Tauchlackbeschichtung (electrocoated steel)

Ein Streifen mit den Dimensionen 150mm x 20mm x 2mm der spritzgegossenen Platten wurde mittig auf ein beöltes Blech (250mm x 100mm x 0,8mm; beölt mit Multidraw PL 61; Hersteller Zeller & Gmelin) gelegt und mittels Schrauben durch Blech und Material fixiert. Im Abstand von 6mm zum Grundblech wurde ein zweites Deckblech (250mm x 30mm x 0,8mm) mittels Fixierschrauben direkt über dem Material angebracht und die Anordnung für mind. eine Stunde bei 23 °C zur Konditionierung vor der Härtung gelagert. Dann wurden die Prüfkörper für die in Tabelle 1 angegebenen Zeiten bei den in Tabelle 1 angegebenen Temperaturen in einem Umluftofen erhitzt; durch die Erhitzung expandierte das Produkt und füllte den Spalt zwischen Grund- und Deckblech ("Sandwich"-Anordnung). Nach Ende der Erhitzung wurde das Testblech für mind. 4 h bei 23 °C gelagert. Die Haftung wurde durch Lösen der Schrauben und Abziehen des Deckblechs im Winkel von 180° geprüft.

*4 Formulierungen und Messergebnisse*

4.1 Tabellarische Übersicht

Die Mengenangaben verstehen sich, sofern nichts anderes vermerkt ist, in Gewichtsprozent.

Tabelle 1:

| Beispiel | 1 | 2 | 3 | 4 | 5 | VV1 | VV2 |
|---|---|---|---|---|---|---|---|
| Farbstoff, Schwarz | 0,2 | 0,2 | 0,2 | 0,3 | 0,5 | - | 0,2 |
| Talkum | 6,6 | 7,2 | 5,8 | 9,8 | 15,8 | 3,3 | 6,6 |
| Unicell® TM | 0,6 | 0,6 | 0,6 | 0,8 | 1,4 | 0,4 | 0,6 |
| Sartomer® SR 350 | 0,8 | 0,6 | 1,6 | 0,8 | 1,2 | 1,6 | 1,6 |
| Perkadox® 14-40 B-PD | 1,6 | 1,2 | 1,6 | 1,6 | 2,6 | 1,0 | 0,8 |
| Elvax® 460A | 7,8 | 7,8 | 7,8 | 10,6 | 17,2 | - | 7,8 |
| Icorene® MP 650-35 | - | - | - | - | - | 5,0 | - |
| Hostanox® 03 PWD | 0,2 | 0,2 | 0,2 | 0,3 | 0,4 | 0,1 | 0,2 |
| Unicell® OH | 5,6 | 5,6 | 5,6 | 7,7 | 12,4 | 1,0 | 5,6 |
| Unicell® D200A | 1,6 | 1,6 | 1,6 | 2,1 | 3,5 | 3,6 | 1,6 |
| Elvax® 460A | 75,0 | 75,0 | 75,0 | 66,0 | 45,0 | 84,0 | 75,0 |
| SUMME | 100,0 | 100,0 | 100,0 | 100,0 | 100,0 | 100,0 | 100,0 |
| Expansion bei 15 min @ 150 °C [%] | > 500 | > 500 | > 500 | > 500 | > 500 | < 200 | < 500 |
| Haftung auf HDG/EGS/CRS/KTL bei 15 min @ 150 °C (beölt mit 3 g/m$^2$) | 100 % kohäsiv | 100 % kohäsiv | 100 % kohäsiv | 100 % kohäsiv | 100 % kohäsiv | 0 % kohäsiv | 80 % kohäsiv |
| Expansion bei 10 min @ 180 °C [%] | > 650 | > 600 | > 600 | > 700 | > 800 | >500 | < 650 |
| Haftung auf HDG/EGS/CRS/KTL bei 10 min @ 180 °C (beölt mit 3 g/m$^2$) | 100 % kohäsiv | 100 % kohäsiv | 100 % kohäsiv | 100 % kohäsiv | 100 % kohäsiv | 80 % kohäsiv | 100 % kohäsiv |
| Expansion bei 40 min @ 220 °C [%] | > 700 | > 700 | > 700 | > 800 | > 1000 | <500 | > 700 |
| Haftung auf HDG/EGS/CRS/KTL bei 40 min @ 220 °C (beölt mit 3 g/m$^2$) | 100 % kohäsiv | 100 % kohäsiv | 100 % kohäsiv | 100 % kohäsiv | 100 % kohäsiv | 80 % kohäsiv | 100 % kohäsiv |

4.2 Verzeichnis der eingesetzten Handelsprodukte

| | |
|---|---|
| Elvax® 460A | Ethylen-Vinylacetat-Copolymer, (ca. 18Gew.-% Vinylacetatanteil im Copolymeren, Schmelzindex 2,5g/10Min bei 190°C und einer Belastung mit 2,16kg) (Firma DuPont) |
| Hostanox® 03 PWD | Ethylenglykol-bis[3,3-bis(3tert-butyl-4-hydroxyphenyl)-butanoat] (Firma Clariant) |
| Icorene® MP 650-35 | LDPE, Pulver, Schmelztemperatur 90 - 120 °C, farblos, |
| Perkadox® 14-40 B-PD | Di-(tert-butylperoxyisopropyl)benzol auf einem Calciumcarbonat-Silicaträger, ca. 40Gew.-% Aktivsubstanzgehalt (Firma Akzo Nobel) |
| Sartomer® SR 350 | Trimethylolpropantrimethacrylat (Firma Sartomer) |

(fortgesetzt)

| Unicell® D200A | Azodiacarbonamid (Firma Tramaco) |
| Unicell® OH | Diphenyloxid-4,4'-disulfohydrazid (OBSH) (Aktivsubstanzgehalt mehr als 90%) (Firma Fernz Speciality Chemicals) |
| Unicell® TM | Zink-di-toluolsulfinat (Firma Tramaco) |

4.3 Auswertung

Die exakte Zusammensetzungen der verschiedenen Formulierungen sowie die Ergebnisse der Bestimmung des Expansionsverhaltens und des Haftungsverhaltens unter unterschiedlichen Bedingungen wurden in Tabelle 1 zusammengefasst.

4.3.1 Vergleich mit Vergleichsversuch VV1

Während die erfindungsgemäßen Zubereitungen 1 bis 5 unter den untersuchten Bedingungen zu 100% ein vorteilhaftes kohäsives Bruchverhalten aufwiesen, zeigt die Vergleichsformulierung VV einen deutlich höheren Anteil an adhäsiven Bruchverhalten (bis zu 0% kohäsiv im Fall der Unterbrandbedingungen). Die Haftung der Vergleichsformulierung auf geöltem Stahl ist folglich deutlich schlechter als die Haftung der erfindungsgemäßen Formulierungen unter den gleichen Bedingungen.

Weiterhin kann den gemessenen Expansionsgraden entnommen werden, dass die erfindungsgemäßen Zubereitungen bei Erhöhung der Härtungstemperatur kontinuierlich weiter expandieren. Selbst bei starken Überbackbedingungen (Erhitzung auf 220°C für 40 Minuten) fallen diese Zubereitungen nicht in sich zusammen, sondern expandieren weiter. Die Vergleichsformulierung des Standes der Technik zeigt hingegen ein Expansionsmaximum bei einer Härtung bei 180°C und beginnt anschließend unvorteilhafter Weise zu schrumpfen.

4.3.2 Vergleich mit Vergleichsversuch VV2

a) Expansion

Im Unterbrandbereich (Expansion bei einer Temperatur von ca. 150°C) weist das Vergleichsbeispiel 2 eine deutlich geringere Expansion auf als die erfindungsgemäßen Rezepturen. Dieser Effekt tritt auch bei einer Expansion bei ca. 180°C noch auf.

b) Haftung

Die Vergleichsrezeptur VV2 zeigt im Unterbrandbereich bei der Ermittlung der Haftung zu beölten Blechen ein nur 80 %iges kohäsives Bruchverhalten und zeigt somit unter diesen Bedingungen eine deutlich schlechtere Haftung als die erfindungsgemäßen Rezepturen.

c) Ausfüllen enger Kavitäten

Zu Vergleichszwecken wurden weiterhin die erfindungsgemäße Rezeptur 1 sowie die Vergleichsrezeptur VV2 zu Plattenware der Dimension 200mm x 200mm x 4mm verarbeitet. Aus diesen Platten wurden jeweils Streifen von 80mm x 30mm x 4mm geschnitten, die in drei Lagen übereinander in eine (symmetrisch) Blechröhre mit einer Tiefe von 10 cm und einem trapezförmigen Querschnitt von 90mm/78mm x 45mm gelegt wurden. Anschließend wurden die mit den Streifen befüllten Blechröhren jeweils für 10min bei 180 °C (Objekttemperatur) eingebrannt.

Bei diesem Versuchsaufbau zeigte sich, dass die Vergleichsrezeptur 2 die Kavität nicht vollständig ausfüllte (lediglich 75 - 80% des Volumens der Kavität wurden gefüllt); somit wurde keine Abdichtung der Kavität erreicht. Die erfindungsgemäße Zusammensetzung des Beispiels 1 dagegen füllte die Kavität vollständig aus und dichtete das zur Verfügung stehende Volumen zufrieden stellend ab.

d) Zusammenfassung

Es konnte somit gezeigt werden, dass die erfindungsgemäße Rezeptur 1 (Massenverhältnis des mindestens einen Peroxids zu dem mindestens einem niedermolekularen multifuntionellen Acrylat von beträgt 0,8 (größer als 0,333)) den Rezepturen des Vergleichsbeispiels 2 (Massenverhältnis des mindestens einen Peroxids zu dem mindestens einem niedermolekularen multifuntionellen Acrylat von beträgt 0,2 (kleiner als 0,333)) sowohl hinsichtlich der Expansionsrate als auch hinsichtlich des Bruchverhaltens überlegen ist. Auch hinsichtlich der Abdichtung von dreidimensionalen Kavitäten hat sich die erfindungsgemäße Rezeptur überraschenderweise als deutlich überlegen erwiesen.

**Patentansprüche**

1. Thermisch expandierbare Zubereitung, enthaltend

   (a) mindestens ein peroxidisch vernetzbares Polymer,
   (b) mindestens eine niedermolekulares multifunktionelles Acrylat,
   (c) mindestens ein Peroxid sowie
   (d) mindestens zwei voneinander verschiedene chemische Treibmittel,

   **dadurch gekennzeichnet, dass** das Massenverhältnis des mindestens einen Peroxids zu dem mindestens einem niedermolekularen multifunktionellen Acrylat mindestens 1:3 beträgt, als mindestens ein peroxidisch vernetzbares Polymer ein oder mehrere Ethylen-Vinylacetat-Copolymere enthalten sind und weniger als 3 Gew.-% eines peroxidisch vernetzbaren Polymers enthalten ist, das kein Ethylen-Vinylacetat-Copolymer ist.

2. Thermisch expandierbare Zubereitung nach Anspruch 1, **dadurch gekennzeichnet, dass** es ein Treibmittelgemisch aus mindestens einem Sulfonsäurehydrazid und Azadicarbonamid enthält.

3. Thermisch expandierbare Zubereitung nach Anspruch 2, **dadurch gekennzeichnet, dass** das Massenverhältnis von Sulfonsäurehydrazid zu Azadicarbonamid mindestens 3 : 1 beträgt.

4. Thermisch expandierbare Zubereitung nach einem der Ansprüche 1 bis 3, **dadurch gekennzeichnet, dass** sie ein Ethylen-Vinylacetat-Copolymer mit einem Vinylacetatanteil von 9 bis 30 Gew.-% aufweist.

5. Thermisch expandierbare Zubereitung nach einem der Ansprüche 1 bis 4, **dadurch gekennzeichnet, dass** sie ein Ethylen-Vinylacetat-Copolymer mit einem Schmelzindex von 0,3 bis 400g/10min, insbesondere von 0,5 bis 45 g/10min, enthält.

6. Thermisch expandierbare Zubereitung nach einem der Ansprüche 1 bis 5, **dadurch gekennzeichnet, dass** das niedermolekulare multifunktionelle Acrylat ausgewählt ist aus Triethlenglycol-Dimethacrylat, Triethyleneglykoldiacrylat, Trimethylolpropantriacrylat (TMPTA) und Trimethylolpropantrimethacrylat (TMPTMA), Pentaerythritol-Triacrylat (TMM), Tetramethylolmethan- Tetraacrylat (TMMT), Pentaerythritol-Trimethacrylat, Di-(Trimethylolpropan)-Tetraacrylat (TMPA) und Pentaerythritol-Tetraacrylat.

7. Thermisch expandierbare Zubereitung nach einem der Ansprüche 1 bis 6, **dadurch gekennzeichnet, dass** das mindestens eine Peroxid auf einen festen inerten Träger aufgebracht ist.

8. Thermisch expandierbare Zubereitung nach einem der Ansprüche 1 bis 7, **dadurch gekennzeichnet, dass** sie einen Aktivator für das Azadicarbonamid enthält.

9. Schottteil zum Abdichten von Hohlräumen eines Bauteils, **dadurch gekennzeichnet, dass** es eine Form aufweist, die an den Hohlraum angepasst ist, und eine thermisch härtbare Zubereitung nach einem der Ansprüche 1 bis 8 aufweist.

10. Schottteil nach Anspruch 9, **dadurch gekennzeichnet, dass** es mindestens ein Befestigungselement aufweist, das eine Verankerung in dem Hohlraum ermöglicht.

11. Schottteil nach einem der Ansprüche 9 oder 10, **dadurch gekennzeichnet, dass** es weiterhin einen Träger aufweist.

12. Schottteil nach Anspruch 11, **dadurch gekennzeichnet, dass** der Träger aus einem thermoplastischen Material besteht.

13. Schottteil nach einem der Ansprüche 11 bis 12, **dadurch gekennzeichnet, dass** die thermisch expandierbare Zubereitung mittels eines Spritzgussverfahrens auf den Träger aufgebracht wird.

**14.** Verfahren zur Abdichtung von Hohlräumen eines Bauteils, wobei ein Schottteil nach einem der Ansprüche 9 bis 13 in den Hohlraum eingebracht wird und anschließend auf eine Temperatur oberhalb von 130°C erhitzt wird, so dass die thermisch expandierbare Zubereitung expandiert und den Hohlraum abdichtet.

**15.** Verwendung eines Schottteils nach einem der Ansprüche 9 bis 13 zur akustischen Abdichtung von Hohlräumen in Bauteilen und/oder zur Abdichtung von Hohlräumen in Bauteilen gegen Wasser und/oder Feuchtigkeit.

**Claims**

**1.** A thermally expandable preparation, containing

(a) at least one peroxidically crosslinkable polymer,
(b) at least one low-molecular multifunctional acrylate,
(c) at least one peroxide, and
(d) at least two different chemical blowing agents,

**characterized in that** the mass ratio of the at least one peroxide to the at least one low-molecular multifunctional acrylate is at least 1:3, one or more ethylene-vinyl acetate copolymers are contained as the at least one peroxidically crosslinkable polymer, and less than 3 wt.% of a peroxidically crosslinkable polymer which is not an ethylene-vinyl acetate copolymer is contained.

**2.** The thermally expandable preparation according to claim 1, **characterized in that** said preparation contains a blowing agent mixture of at least one sulfonic acid hydrazide and azodicarbonamide.

**3.** The thermally expandable preparation according to claim 2, **characterized in that** the mass ratio of sulfonic acid hydrazide to azodicarbonamide is at least 3:1.

**4.** The thermally expandable preparation according to one of claims 1 to 3, **characterized in that** said preparation comprises an ethylene-vinyl acetate copolymer having a vinyl acetate content of from 9 to 30 wt.%.

**5.** The thermally expandable preparation according to one of claims 1 to 4, **characterized in that** said preparation contains an ethylene-vinyl acetate copolymer having a melt flow index of from 0.3 to 400 g/10 min, in particular from 0.5 to 45 g/10 min.

**6.** The thermally expandable preparation according to one of claims 1 to 5, **characterized in that** the low-molecular multifunctional acrylate is selected from triethylene glycol dimethacrylate, triethylene glycol diacrylate, trimethylolpropane triacrylate (TMPTA) and trimethylolpropane trimethacrylate (TMPTMA), pentaerythritol triacrylate (TMM), tetramethylolmethane tetraacrylate (TMMT), pentaerythritol trimethacrylate, di(trimethylolpropane)tetraacrylate (TMPA) and pentaerythritol tetraacrylate.

**7.** The thermally expandable preparation according to one of claims 1 to 6, **characterized in that** the at least one peroxide is applied to a solid, inert carrier.

**8.** The thermally expandable preparation according to one of claims 1 to 7, **characterized in that** said preparation contains an activator for the azodicarbonamide.

**9.** A baffle part for sealing cavities in a component, **characterized in that** said baffle part has a shape adapted to the cavity and comprises a thermally curable preparation according to one of claims 1 to 8.

**10.** The baffle part according to claim 9, **characterized in that** said baffle part comprises at least one fastening element, which provides for anchoring in the cavity.

**11.** The baffle part according to one of claims 9 or 10, **characterized in that** said baffle part further comprises a carrier.

**12.** The baffle part according to claim 11, **characterized in that** the carrier consists of a thermoplastic material.

**13.** The baffle part according to one of claims 11 to 12, **characterized in that** the thermally expandable preparation is applied to the carrier by means of an injection molding process.

14. A method for sealing cavities in a component, wherein a baffle part according to one of claims 9 to 13 is introduced into the cavity and is then heated to a temperature above 130 °C such that the thermally expandable preparation expands and seals the cavity.

15. The use of a baffle part according to one of claims 9 to 13 for acoustically sealing cavities in components and/or for sealing cavities in components against water and/or moisture.

**Revendications**

1. Préparation thermo-expansible, contenant

   (a) au moins un polymère réticulable par peroxyde,
   (b) au moins un acrylate multifonctionnel de bas poids moléculaire,
   (c) au moins un peroxyde, et
   (d) au moins deux agents gonflants chimiques différents l'un de l'autre,

   **caractérisée en ce que** le rapport massique de l'au moins un peroxyde à l'au moins un acrylate multifonctionnel de bas poids moléculaire est d'au moins 1:3, **en ce qu'**un ou plusieurs copolymères éthylène-acétate de vinyle sont contenus en tant qu'au moins un polymère réticulable par peroxyde, et **en ce que** moins de 3 % en poids d'un polymère réticulable par peroxyde, qui n'est pas un copolymère éthylène-acétate de vinyle, sont contenus.

2. Préparation thermo-expansible selon la revendication 1, **caractérisée en ce qu'**elle contient un mélange d'agents gonflants d'au moins un hydrazide d'acide sulfonique et d'azadicarbonamide.

3. Préparation thermo-expansible selon la revendication 2, **caractérisée en ce que** le rapport massique de l'hydrazide d'acide sulfonique à l'azadicarbonamide est d'au moins 3: 1.

4. Préparation thermo-expansible selon l'une des revendications 1 à 3, **caractérisée en ce qu'**elle présente un copolymère éthylène-acétate de vinyle comportant une teneur en acétate de vinyle comprise entre 9 et 30 % en poids.

5. Préparation thermo-expansible selon l'une des revendications 1 à 4, **caractérisée en ce qu'**elle contient un copolymère éthylène-acétate de vinyle comportant un indice de fusion compris entre 0,3 et 400 g/10 min, en particulier entre 0,5 et 45 g/10 min.

6. Préparation thermo-expansible selon l'une des revendications 1 à 5, **caractérisée en ce que** l'acrylate multifonctionnel de bas poids moléculaire est choisi parmi le diméthacrylate de triéthylène glycol, le diacrylate de triéthylène glycol, le triacrylate de triméthylolpropane (TMPTA) et le triméthacrylate de triméthylolpropane (TMPTMA), le triacrylate de pentaérythritol (TMM), le tétraacrylate de tétraméthylométhane (TMMT), le triméthacrylate de pentaérythritol, le tétraacrylate de di-triméthylolpropane (TMPA) et le tétraacrylate de pentaérythritol.

7. Préparation thermo-expansible selon l'une des revendications 1 à 6, **caractérisée en ce que** l'au moins un peroxyde est appliqué sur un support solide inerte.

8. Préparation thermo-expansible selon l'une des revendications 1 à 7, **caractérisée en ce qu'**elle contient un activateur pour l'azadicarbonamide.

9. Pièce de cloisonnement permettant d'étanchéifier des cavités d'un composant, **caractérisée en ce qu'**elle présente une forme adaptée à la cavité, et **en ce qu'**elle présente une préparation thermodurcissable selon l'une des revendications 1 à 8.

10. Pièce de cloisonnement selon la revendication 9, **caractérisée en ce qu'**elle comporte au moins un élément de fixation qui permet un ancrage dans la cavité.

11. Pièce de cloisonnement selon l'une des revendications 9 ou 10, **caractérisée en ce qu'**elle comporte également un support.

**12.** Pièce de cloisonnement selon la revendication 11, **caractérisée en ce que** le support est constitué d'un matériau thermoplastique.

**13.** Pièce de cloisonnement selon l'une des revendications 11 à 12, **caractérisée en ce que** la préparation thermo-expansible est appliquée sur le support au moyen d'un procédé de moulage par injection.

**14.** Procédé d'étanchéification des cavités d'un composant, une pièce de cloisonnement selon l'une des revendications 9 à 13 étant insérée dans la cavité et étant ensuite chauffée à une température supérieure à 130 °C, de sorte que la préparation thermo-expansible subisse une expansion et étanchéifie la cavité.

**15.** Utilisation d'une pièce de cloisonnement selon l'une des revendications 9 à 13 pour assurer l'étanchéité acoustique de cavités dans des composants et/ou pour assurer l'étanchéité de cavités dans des composants contre l'eau et/ou l'humidité.

**IN DER BESCHREIBUNG AUFGEFÜHRTE DOKUMENTE**

**In der Beschreibung aufgeführte Patentdokumente**

- DE 19632351 A1
- WO 200130906 A1
- WO 2008034755 A1